# EUROPEAN PATENT SPECIFICATION

(11) **EP 0 657 249 B1**
(45) Date of publication and mention of the grant of the patent: **28.10.1998**
(21) Application number: 94203506.4
(22) Date of filing: 02.12.1994
(51) Int. Cl.: B24B 41/047, F16N 9/02

(54) **Lubricating device for grinding head**
Schmiervorrichtung für Schleifkopf
Dispositif de lubrification pour tête de meulage

(30) Priority: 06.12.1993 IT TV930110; 25.08.1994 IT TV940050 U
(43) Date of publication of application: 14.06.1995
(73) Proprietor: Toncelli, Luca, I-36061 Bassano del Grappa (Vicenza) (IT)
(72) Inventor: Toncelli, Luca, I-36061 Bassano del Grappa (Vicenza) (IT)
(74) Representative: Dragotti, Gianfranco

(56) References cited:
- EP-A- 0 236 865
- CH-A- 296 643
- DE-A- 4 209 273
- DE-B- 1 046 423
- DE-U- 8 808 679

## Description

The present invention relates to a smoothing and polishing head for the manufacture of stone and/or ceramic materials, as for example panels, tiles and the like.

Smoothing and/or polishing heads for the manufacture of stone and/or ceramic materials are well known and it is also well known that they consist of a sealed box-like body rotated by a shaft of a driving motor entering thereinto and transmitting working power through internally arranged transmitting mechanisms and gears to abrading blocks arranged outside said body. The above mentioned heads, according to the shape of the used abrading blocks and the kind of movement to them provided, are classified in two discrete categories, i. e. swinging sectors and rotating rolls heads.

In the present description both kinds of heads will be involved. Just for shortening the disclosure and not to describe the different and many mechanisms therein housed, which are extraneous with respect to the the inventive idea of the present invention, consisting of a new lubricating device provided to them, references will be made to an earlier Italian patent and to three earlier Italian patent applications, as it will herebelow specified.

As regards swinging sector heads the above mentioned reference relates to the Italian Patent No. 1,175,191 in the name of Marcello Toncelli and the Italian Patent Application S. N. VI 91A000065 in the name of Luca Toncelli, while for rotating rolls heads reference will be made to DE-A1-4 209 273 and the Italian Patent Application S. N. VI 92U000061 both in the name of Luca Toncelli.

The above mentioned mechanisms and gears inside the head have, obviously, to be lubricated for reducing the among them present frictions. The embodiment of such a lubricating operation always involved serious problems for the manufacturers mainly connected with the difficulties in obtaining a uniform and constant lubricant distribution inside a rotating means.

According to the prior art the lubrication has been carried out by grease provided to said mechanisms and gears before closing the box-like body housing them.

The above mentioned approach did not, however, give very satisfying results because, in operation, that is, when the head is rotating, the grease tends to migrate, owing to centrifugal action, to the peripheral mechanisms on which it accumulates to the detriment of the lubricant quantity remaining among the central mechanisms, resulting prone to an earlier wear. Such a problem is obviously emphasized by the high rotation speed of the heads. Further, as it is well known, the grease is a soiling matter and that makes highly annoying any maintenance and/or components changing operation when it is necessary to operate into the box-like body.

To overcome the above mentioned problems it has been proposed to use oil lubrication, but also this approach showed not negligible drawbacks and problems of difficult solution.

In fact, the lubricating oil inside the rotating box-like body does not equally arrange thereinto, completely and constantly filling the internal volume for affecting all the internal gears thereinto contained. On the contrary, oil tends to arrange according to a rotation solid whose shape is similar to a rotation paraboloid and whose vertex lies on the bottom of the box-like body. In percentage, the oil gathers mainly on the periphery of said bottom, then filling peripheral portions of the box-like body with a depth decreasing as increases the distance of said portion from the bottom. Owing to said decrease, at some height from the bottom the oil is missing along the rotation axis, so that the lubrication of components or gears located in the upper portion of the box-like body is impossible.

Not even it is to disregard the fact that the oil pool is not so relevant to justify and permit a sufficient lubrication of the here located gears.

To obtain a complete lubrication, interesting all the internal components or gears of the smoothing head, additional means have been provided as for example pumps for distributing and supplying oil to the areas otherwise lacking lubricant. Unfortunately, also this approach appeared not lacking problems and however of very complicated and difficult embodiment. In fact, being the pump arranged either outside or inside the box-like body, its provision raises not negligible problems as herebelow explained.

Actually its presence makes the smoothing head an eccentric rotating gear and thus prone to unbalances which are surely damaging to a proper operation thereof causing an uneven working of the stone manufacture, if not a damage for it.

As an example of what hereabove stated reference is made to the closest prior art DE-U-88 08 679.8 which actually discloses and depicts a smoothing and polishing head containing a circular eccentric gear, housed in a cylindrical chamber, for actuating swinging abrading sectors and a member providing forced lubricant circulation provided according to two embodiments.

According to a first embodiment, this member consists of an opening through a lateral wall of the eccentric circular gear faced against a lateral internal wall of the cylindrical chamber itself and provided with a check valve permitting the liquid lubricant to enter, through the opening, into a duct but preventing the liquid to exit from said opening. The lubricating liquid is compelled to enter the opening every time a lateral wall area of the eccentric circular member approaches the lateral internal wall of the circular chamber itself because, oving to its viscosity, a pressure wave is formed in the lubricating liquid, ceasing this pressure wave every time the area itself is removed from the internal lateral wall of the circular chamber itself. Then for every approach between lateral walls there is a liquid injection into said opening and into connected ducts, while for every removal the injection ceases, with possible liquid returns prevented by the unidirectional valve. The lubricating liquid collected by the above mentioned opening flows through ducts to lubricate members needing lubrication.

According to a second approach, the eccentric circular gear is provided in its lateral wall with a cylindrical cavity housing a piston held as abutting against the internal lateral wall of the cylindrical chamber by a spring held between the bottom of the cylindrical cavity and the internal face of the piston, forming the assembly of the cylindrical cavity and the piston a reciprocating pump. The cylindrical cavity is connected through a depression duct, provided with unidirectional inlet valve, to the cylindrical chamber itself and through at least a pressure duct, in turn provided with unidirectional outlet valve, to members needing lubrication. In addition, the cylindrical cavity itself can be provided with a further outlet duct, connected to the cylindrical chamber and provided with a relief valve to discharge lubricant in eccess and prevent too high pressure raising into the pump itself.

It is easily understood that, as hereabove mentioned, the smoothing and polishing head provided with eccentric moving members and movable pumping means, according to any of the two approaches hereabove mentioned, emphasizes the effects of the eccentric movements and suffers the complained drawbacks of not uniform working or damaging of the stone material manufacture, besides the complications and the needs of maintenance connected to the presence of means for pumping lubricant into the eccentric circular gear.

The problem of withdrawing liquid lubricant from a rotating tank to send it into mechanical components, such as bearings or gears, is faced in DE-B-1.046.423. According to what here disclosed, is used the hydrostatic pressure, formed in a liquid into a cylindric tank, or similar container, when it rotates about its axis, to push it into restricted spaces, such as gaps between a shaft and a supporting bearing or between the teeht of each other engaged gears.

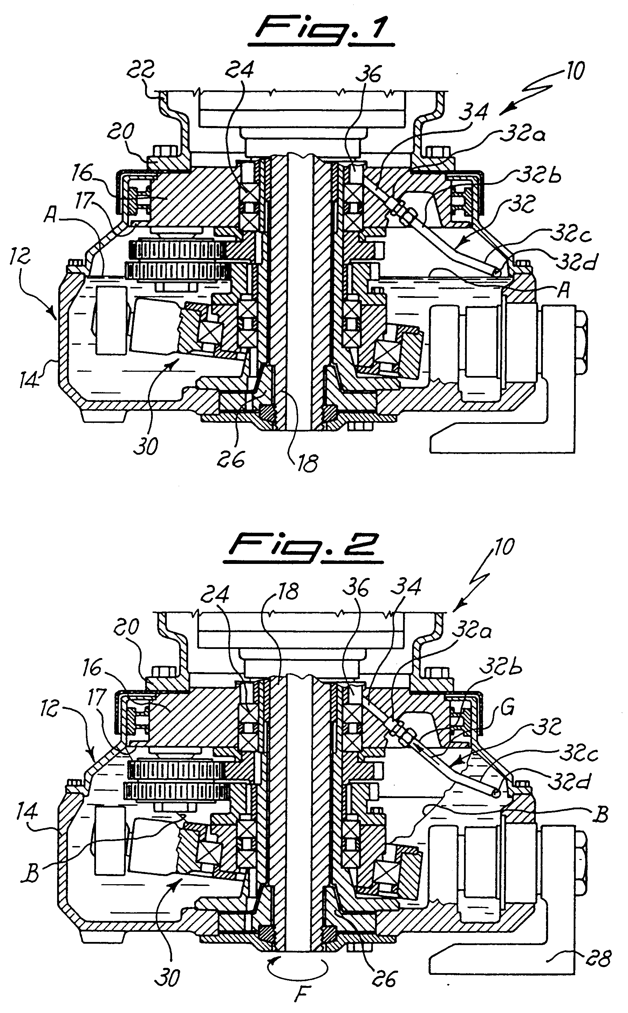

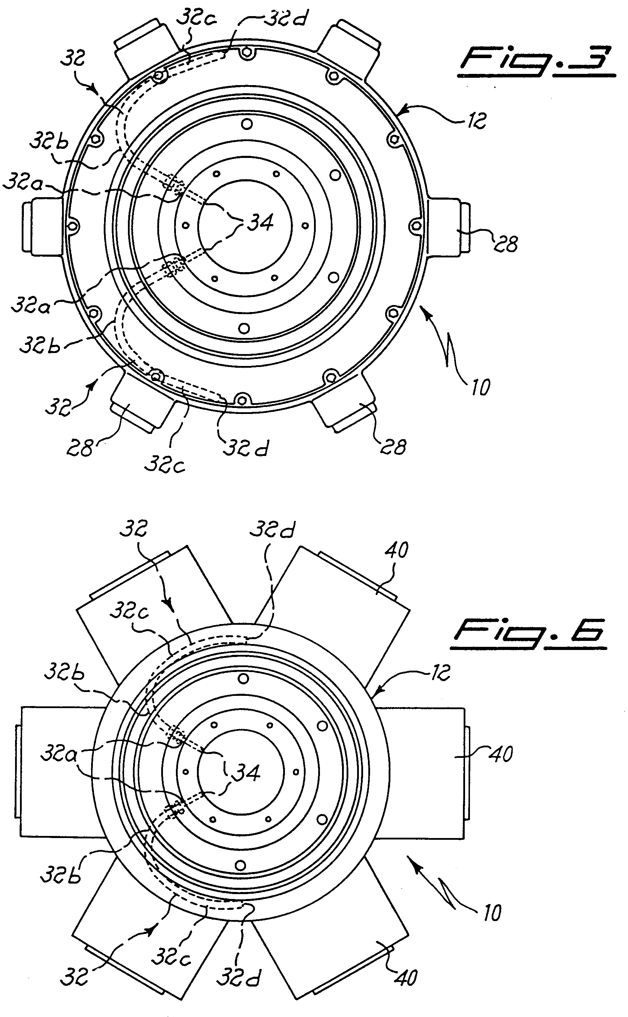

From what it is possible to infer, from both the description and the drawings, the inventors were concerned with equipments rotating at particularly high angular speeds (always well higher than 100 rpm), as it is particularly shown by the configuration of the free surface of the liquid depicted in figures 1 and 2, reminding a parabola branch well near the vertical direction, and it means that the centrifugal force is decisely prevalent with respect to the gravity force. In this case of high rotational speed, disposing of high statical pressures derived from the present great centrifugal forces, are not very important the however existing resistances against a liquid lubricant, which is a wiscous oil and highly adhering to metal surfaces, when is passed through ducts having the duty of bringing it to the components to be lubricated, so that there is not a great concern in choosing a particular direction of liquid drawing ducts (being satisfactory also a radial direction, wich is perpendicular to the rotating direction of the tank and the thereinto contained liquid) and not even to choose particular diameters of the drawing ducts even if it is well known that for viscous liquids the flow resistances are inversely proportional to the fourth power of the diameter of the ducts themselves, so that, for example it is very more convenient to have just one duct of a given diameter than four duct of half diameter, even if they have together a cross-section equivalent to that of the given diameter duct. (Substantially, a duct of a given diameter opposes a resistance to liquid flow equivalent to a sixteenth (2⁻⁴) of the resistance opposed by a duct having half diameter, so that still offers a flow resistance which is just a fourth of that offered by four ducts of half diameter working in parallel).

Thus the approach disclosed by DE-B-1.046.423 in all its embodiments works weel just for rotation speeds well higher than 100 r. p. m., being poorly efficient below said speed. In addition, should need, as in the case of the present invention, assure lubricant drawing independentely from the rotation direction, the approaches with the radially oriented drawing ducts must be choosen, as they work independentely from the rotation direction of the tank, but are less efficient from the view point of the mechanical yeld and the drawing efficiency because the liquid lubricant is compelled, in passing from the tank to the drawing and circulation path, to suddenly change in direction of angle of substantially 90°.

It is understood that this approach is well useful in lubricating gears whose rotational speed is never under 100 rpm. Further this approach requires also a hermetic closure of the rotating tank because the high pressure inside the rotating liquid would tend to cause leaks in any less than hermetic connection whit well imaginable consequences.

There is also an approach useful for low rotation speeds of lubricant tanks, such as that disclosed in CH-A-296.643 relating to a method for lubricating bearings of one of the shafts comprised in a mechanical sieve moving according to an eccentric movement.

This eccentric movement, which is transmitted to every portion of the sieve, produces a raise in the free level of a pool of lubricating oil housed in a cylindrical chamber, working as lubricant tank, located at the basis of every shaft of the sieve, rotating said raised free level against the lateral internal wall of the cylindric chamber. Obviously, the raise of the free level against the lateral internal wall produces a hydrostatic pressure, determining in turn a head able to raise to some height a liquid into a duct provided to convey lubricating liquid. To be sure that the lubricating oil can rise to a bearing located at the upper end of the duct, is used a duct extension in the form of a pipe radially located in the cylindrical chamber near the external periphery thereof and provided with a folded end faced against the rotation direction of the oil in the cylindrical chamber itself to utilize also the force deriving from the kinetic energy of oil rotation in order to raise the head obtainable from said oil.

The system here described and depicted works well enough for the lubrication needs of shafts associated with planar sieves to which it is sufficient to assure an intermittent lubricant supply occurring every time that the lubricant itself, moving along the lateral internal wall of the cylindrical chamber as a wave connected to the eccentric movement of the sieve, succeds in submerging the drawing duct, but can be not sufficient in the smoothing heads to which the present invention intends to supply lubrication because in them the lubricating flow must be continuous. Further, as the disclosed system uses just one pipe for the drawing duct directed against the movement of the lubricant, it results that it could lubricate just heads expected to rotate just in one direction.

At last, also this system is compelled to hermetically close the perifery of the cylindrical stock chamber for the lubricant, to prevent any leakage, by providing possible slidable connections near the chamber axis where there is never any lubricant.

It is easily understood that also this system would be absolutely unsuitable for lubricating smoothing heads for stone materials.

Presently has been conceived, and is the suject matter of the present invention, a smoothing and polishing head comprising a lubrication device for the internal mechanisms and gears for the manufacture of stone and/or ceramic materials. The head, not only is suitable to completely eliminate the above mentioned problems, but is also a highly innovating approach which, in spite of its noticeable simplicity, results very efficient and reliable.

Therefore, it is one of the main objects of the present invention to provide a smooting and polishing head for the manufacture of stone materials in which is made possible oil lubrication of all its internal mechanisms and gears without ask for the provision of additional operating members such as supply pumps or the like.

Another and not negligible object of the present invention is to provide a smoothing and polishing head in which, thanks to suitable static conveying means, with which is provided, is embodied a complete lubrication of its internal members just through the rotation in a way completely independent from the rotation speed and direction.

Eventually, a last object of the present invention is to provide the elimination of lubricating fluid leaks between a fixed cover and a rotary seal of the smothing and polishing head for stone material.

Therefore, it is the subject matter of the present invention a smoothing and polishing head for the manufacture of generally stone and/or ceramic materials such as slates, panels, tiles and the like, comprising a lubrication device for the internal mechanisms and gears, the head comprising a sealed box-like rotated by a shaft of a driving motor entering thereinto and transmitting working movement, through said mechanisms and gears, to either swinging sectors or rotating rolls of abrasive material fitted outside said box-like body, the latter substantially comprising a casing containing said operating members and gears for the transmission of the movement which is rotated by said driving motor and is sealed at the top by a fixed cover crossed by said shaft of the driving motor, said head being characterized in that it comprises at least a pair of ducts symmetrically arranged one with respect to the other and with respect to a diametral plane in which lies the rotation axis of the driving motor and connected through an open end thereof with the inside of said casing embodied in said upper cover fixed in a substantially central area, said ducts extending at first in a substantially radial direction into said casing at the contour of a diametral plane perpendicular to the rotation axis of the driving motor shaft and then bending and extending in a final portion arranged according to a direction substantially tangential to the contour of said casing and ending with their open end, further the ducts being arranged in opposed directions, so that when the smoothing head rotates in a direction just one duct is active, while the other duct is active when the head rotates in an opposed direction, and in that between the inside of the casing and the upper fixed cover is interposed a flange, extending to graze the internal wall of the casing, having the duty to limit and maintain lowered the level of the lubricant pool, preventing any leakage thereof to outside.

The features as well as the advantages of the head according to the present invention will result more clearly from the following detailed description of embodiments thereof with reference to the enclosed drawings, in which:
figure 1 is a schematic view in partial longitudinal cross-section of a smoothing head having swinging abrasive sectors, when is in steady state, provided with the lubricating device at rest;
figure 2 is a view, similar to figure 1, in which the smoothing head is rotating with the lubricating device working;
figure 3 is a schematic planar view of the smoothing head of figure 1;
figure 4 is a schematic view in partial longitudinal cross-section of a smoothing head having rotating abrasive rolls, when is in steady state, provided with the lubricating device at rest;
figure 5 is a view, similar to figure 4, in which the smoothing head is rotating with the lubricating device working, and
figure 6 is a schematic planar view of the smoothing head of figure 4.

Referring at first to figures 1 to 3, the head according to the present invention is described the head being provided with swinging abrasive sectors for smoothing manufacture of stone materials. As regards the shape of the head and the mechanisms and gears inside housed, their description will be omitted as this head is of the kind forming the subject matter of the above mentioned Italian patents N. 1.175.191 in the name of Marcello Toncelli and N. VI91A000065 in the name of Luca Toncelli to which specifical reference is made. The following description will be exclusively limited to the members substantially interesting the subject matter of the present invention.

The above head is indicated in the whole by 10 and consists of a box-like body 12 comprising a casing 14, suitable to be rotated by a driving motor, not shown, and by a fixed cover 16 closing it hermetically at the top.

From the cover 16 descends a flange 17 laterally protruding to graze the internal wall of the casing 14 to for providing a lubricant sealing function which will be more extensively explicated when the operation of the head according to the invention will be disclosed.

The cover 16 is crossed in the center by a rotating shaft 18 which enters into the casing 14 and is provided at the upper end with a flange 20 for the connection to said driving motor, which is housed in a fixed box 22 of moving members upside supporting the driving motor and downside connected to the cover 16. The rotation of the shaft 18 with respect the fixed cover 16 is allowed through the interposition, between said two members, of ball bearings 24 while said shaft 18 is firmly connected to the casing 14 by means of a flange 26 rigidly connected to the shaft 18 through well known means, such as a splined shaft, keys, or the like, to move it into rotation.

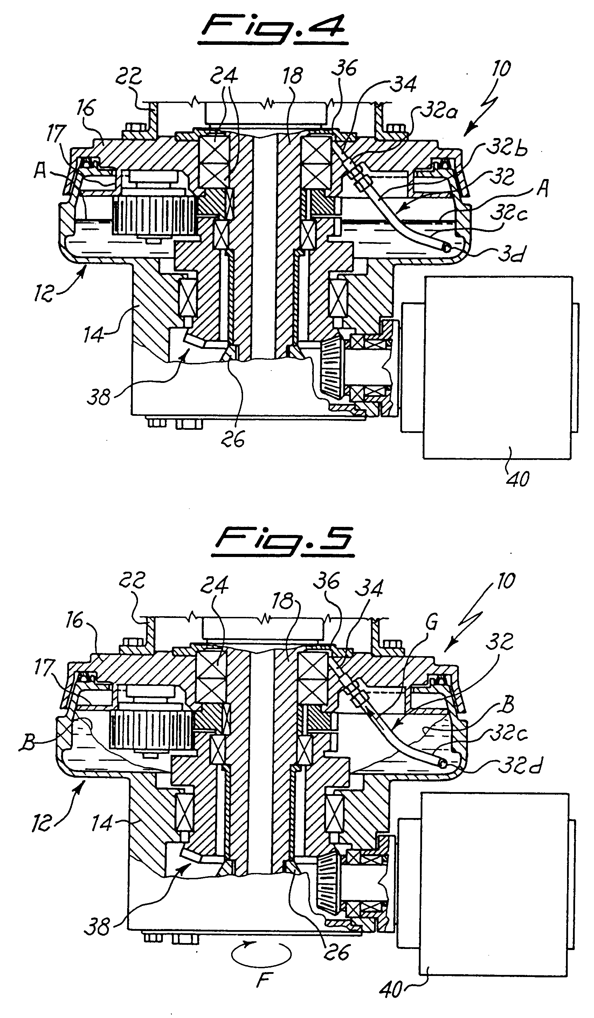

The casing 14 encloses all the mechanisms and transmitting gears of the movement allowing to transform the rotation movement of the shaft 18 in a swinging movement, around radial axes perpendicular to the rotation axis of the shaft 18, of sector grinders 28, of which just one is visible in the figures 1 and 2, while they result all partially visible in figure 3.

All the above mentioned mechanisms and movement transmitting are not described in detail for the here above stated reasons and, just for reference convenience, they are indicated in the whole by the numeral 30.

The head according to the invention comprises a device for lubricating said mechanisms and gears comprising, in the considered embodiment, a pair of ducts 32 both visible in the figure 3 while in the figures 1 and 2 just one is visible.

As can be appreciated particularly from figure 3, they are arranged in opposed symmetry with respect to a diametral plane of the smoothing head 10 in which lies the rotation axis of the shaft 18 and extend inside the casing 14 of the head 10 according to a substantially curved longitudinal axis as herebelow pointed.

Anyone of the ducts 32 is sealingly connected, in any known way, to an end of a passage 34 formed in said upper fixed cover 16 in an essentially central portion thereof. Said passage 34 is connected, through the other end thereof, with the inside of the casing 14. More properly, said end of the passage 34 flows into the upper portion of the annular space comprised between the shaft 18 and the opening of the cover 16 through which passes said shaft 18.

The ducts 32, starting from their ends 32a, extend in substantially radial direction inside the casing 14 with an initial portion 32b thereof till the contour of the diametral plane of said casing 14 perpendicular to the rotation axis of the shaft 18. In this area the ducts 32 are bent and project in a final portion 32c extending in accordance with a direction substantially tangential to the contour of the casing 14 for ending into their other open end 32d.

Presently referring to figures 4 to 6, it is seen the head according to the present invention, comprises a lubrication device provided with abrasive rotating rollers for smoothing manufactures of stone materials. Also as regards the shape of this head and the mechanisms and gears housed thereinto, their description will be omitted as it is of the kind of those forming the subject matter of the above mentioned DE-A1-4 203 273 and Italian Patent Application N. VI 92U000061 both in the name of Luca Toncelli to which reference is made. The following description will be limited just to the members substantially interesting the object of the present invention.

It is to further notice that the description of the present head, as above stated, as well as that of its lubricating device can be further limited. In fact, as regards the lubricating device, the inventive concept is identical to that of the lubricating device of the head having swinging sectors, while as regards the mechanisms and gears for transmitting the movement housed into the head, they differ from those of the preceding head because in this case they have to transform the rotary movement of a driving shaft (the rotary shaft 18) in a rotary movement of many shafts perpendicular to the preceeding one to everyone of which an abrasive roller 40 is associated.

Therefore, referring to figures 4 to 6, it is seen the shaft 18 which, after having crossed the closing upper cover 16, is connected to the casing 14 for its rotation. Inside the casing 14 are arranged the mechanisms and gears for transmitting the movement, indicated in whole by the numeral 38 and rotating the abrasive rollers 40. The remaining components are not described in detail and are indicated by the same numerals.

It is to notice that also in this embodiment of a head with rotating abrasive rollers is used a flange 17 completely similar and doing the same operations of the flange 17 shown in the figures 1 and 2 depicting the head embodiment provided with swinging sector grinders 28. The lubricant seal operation of this flange is completely similar to that of the corresponding flange indicated by the same numeral in the figures 1 and 2.

The same details are valid for the lubricating device comprised of two symmetric ducts 32 connected on a side to the passage 34 of the cover 16 whose shape is substantially identical to that previously decribed for the smoothing head having abrasive swinging sectors. Also in this case the remaining members are not described in detail and are indicated by the same numerals.

The operation of the lubricating device of the head for smoothing and polishing manufactures of stone material is the following one.

Taking into account the fact that, for the two kinds of heads considered, the operation of the above mentioned device is the same and their constituent members are indicated by the same numerals, of course it will be sufficient just one description without specifying to what kind of head is intended to refer.

However, it is important a preliminary statement on the reciprocal arrangement of the two ducts 32. Said ducts are positioned in symmetric way, definible as opposed, because, when the smoothing head 10 is rotating in a direction just one of them is working, while works the other one when said head 10 is rotating in opposed direction.

Let us assume to start from the condition of stationary smoothing head 10, i. e. still standing as depicted in the figures 1 and 4, from which it is seen that the lubricating oil fills partially the casing 14 till the level A.

When the head 10, and more specifically its casing 14, begins to rotate, the oil tends to be arranged, as depicted in the figures 2 and 5, according to a paraboloid, possibly disturbed by interferences with obstacles, having a profile indicated by the line B whose vertex lies on the bottom of the casing 14. Therefore, in percentage, the oil is collected mainly on said bottom, near the periphery, going then to fill peripheral portions of said casing 14 at a depth gradually reducing as raises the distance of portions from the bottom. According to the prior art, therefore, most of the mechanisms and gears 30, 38 should be excluded from the lubrication. On the contrary, thanks to the lubricating device of the head according to the present invention, in accordance with the rotation direction of the casing 14, one of the ducts 32, for example that visible in the figures 2 and 5, if the rotation occurs as indicated by the arrow F in these figures and in the figures 3 and 6, is continously flooded with a stream of lubricating oil forcefully intaking in its open end 32d and then going inside as indicated by the arrow G, reaching at last the annular space 36 comprised between the shaft 18 and the opening of the cover 16 through which passes said shaft 18.

At this time the oil begins to run down flooding at first the bearings 24 interposed between the shaft 18 and the cover 16, then lubricating all the underlying mechanisms and gears 30 and 38 on which is distributed by both the gravity and the centrifugal forces. The oil flow is allowed by drip thereof between the various mechanisms and gears 30, 38 thanks to the operating gaps existing among them and, therefore, the lubricant distribution occurs continuously and forcefully owing to the same head provided to the oil at the intake of the duct 32. This operation is particularly intensive if it is taken into account the high rotary speed of the smoothing head 10 providing such a pressure to improve oil dripping among the various mechanisms 30 and 38 which, threfore, are submitted to an efficient and uniform lubrication. That occurs in a complete way. However, it is to notice that the shaping of the end portions 32c of the ducts 32, tangential for a long stretch to the internal wall of the casing 14, allows a sufficient lubricant drawing also when the head has to rotate slowly, owing to the tranformation of the kinetic energy of the lubricant rotating into the casing 14 in potential energy providing the raising of the lubricant into the climbing portions of the ducts 32. Further, it is to notice that, having used for the ducts 32 common pipes for ducting oily liquids, such as lubricant and/or hydrualic fluids, is enjoyed the advantage of using relatively large diameter pipes (of the order of some millimeter) giving minimal loss of pressure of the lubricant flowing thereinto.

An identical situation is set if the rotation of the head 10 occurs in inverse direction with respect to that presently considered, being the oil flow provided by the other of the ducts 32.

The operation of the flange 17, whose presence completely eliminates any lubricant leakage between the casing 14 and the fixed cover 16, is not completely understood. It is possible to assume either that the presence of the flange 17 flushes any level disturbance of the lubricant preventing the formation of waves and splashes which can go over the fixed cover, or, as the lubricant oil is a liquid wetting metal portions, it happens that the flange 17 creates a still standing liquid layer thereagainst, so slowing the lubricant in the upper portion of the casing 14 to reduce the quantity of lubricant leaked through the gap between the flange 17 and the internal wall of the casing 14 to such a negligible level to be held still standing by the centrifugal force in the corner between the upper surface of the flange 17 and the internal wall of the casing 14 preventing any further leakage of lubricant to the fixed cover 16.

## Claims

1. Smoothing and polishing head (10) comprising a lubrication device for the internal mechanisms and gears, the smoothing and polishing head (10) for the manufacture of generally stone and/or ceramic materials such as slates, panels, tiles and the like comprising a sealed box-like body (12) rotated by a shaft (18) of a driving motor entering thereinto and transmitting working movement, through said mechanisms and gears, to either swinging sectors (28) or rotating rolls (40) of abrasive material fitted outside said box-like body (12), the latter substantially comprising a casing (14) containing said operating members and gears for the transmission of the movement which is rotated by said driving motor and is sealed at the top by a fixed cover (16) crossed by said shaft (18) of the driving motor, said head being characterized in that it comprises inside the upper part of the head (10) at least a pair of ducts (32) symmetrically arranged one with respect to the other and with respect to a diametral plane in which lies the rotation axis of the shaft (18) of the driving motor and connected through an open end thereof (32a) to a passage (34) communicating with the inside of said casing (14) embodied in said upper fixed cover (16) in a substantially central area, said ducts (32) extending at first in a substantially radial direction into said casing (14) at the contour of a diametral plane perpendicular to the rotation axis of the driving motor shaft (18) and then bending and extending in a final portion (32c) arranged according to a direction substantially tangential to the contour of said casing (14) and ending with their open end (32d), further the ducts (32) being arranged in opposed directions, so that when the smoothing head (10), rotates in a direction just one duct (32) is active, while the other duct (32) is active when the head (10) rotates in an opposed direction; and in that between the inside of the casing (14) and the upper fixed cover (16) is interposed a flange (17), extending to graze the internal wall of the casing (14), having the duty to limit and maintain lowered the level of the lubricant pool, preventing any leakage thereof to outside.

2. Head according to claim 1, characterized in that the end of the passage (34) opposed to that connected to the open end (32a) of the ducts (32) flows into the upper portion of the annular space (36) comprised between said shaft (18) and the opening of the fixed cover (16) through which passes the shaft (18).

3. Head according to claim 2, characterized in that the oil descends from said annular space (36) to lubricate all the underlying mechanisms and gears (30 and 38) on which is distributed by gravity and centrifugal force.

4. Head according to claim 3, characterized in that the oil flow among the mechanism and gears (30, 38) is permitted by oil dripping thanks to operating gaps existing among them and, therefore, the lubricant distribution occurs in continuous and forced way owing to the same head given to the oil at the intake of the duct (32) during the rotation of the smoothing head (10).

## Patentansprüche

1. Glätt- und Polierkopf (10), umfassend eine Schmiereinrichtung für die inneren Mechanismen und Getriebe, wobei der Glätt- und Polierkopf (10) für die Bearbeitung von im allgemeinen Stein und/oder Keramikwerkstoffen, wie zum Beispiel Tafeln, Platten, Fliesen und dergleichen, einen abgedichteten kastenartigen Körper (12) umfaßt, der durch eine Welle (18) eines Antriebsmotors drehbar ist, die darin eintritt und eine Arbeitsbewegung durch die Mechanismen und Getriebe entweder auf Schwingsektoren (28) oder Drehwalzen (40) aus Schleifmaterial überträgt, die außerhalb des kastenartigen Körpers (12) angebracht sind, wobei der letztere im wesentlichen ein Gehäuse (14) umfaßt, das die Betriebselemente und Getriebe für die Übertragung der Bewegung enthält, das durch den Antriebsmotor gedreht und oben durch eine angebrachte Abdeckung (16) abgedichtet ist, die durch die Welle (18) des Antriebsmotors durchkreuzt ist, wobei der Kopf **dadurch gekennzeichnet ist, daß** dieser im Inneren des oberen Teils des Kopfes (10) zumindest ein Paar Leitungen (32) umfaßt, die symmetrisch eine bezüglich der anderen und bezüglich einer Diametralebene angeordnet sind, in der die Drehachse der Welle (18) des Antriebsmotors liegt, und durch ihr offenes Ende (32a) an einen Durchgang (34) angeschlossen sind, der mit dem Inneren des Gehäuses (14) in Verbindung steht, der in der oberen angebrachten Abdeckung (16) in einem im wesentlichen mittleren Bereich verkörpert ist, wobei sich die Leitungen (32) zuerst in eine im wesentlichen radiale Richtung in dem Gehäuse (14) an der Kontur einer Diametralebene, rechtwinklig zu der Drehachse der Antriebsmotorwelle (18) erstrecken, und sich dann biegen und in einen Endabschnitt (32c) erstrecken, der gemäß einer Richtung im wesentlichen tangential zu der Kontur des Gehäuses (14) angeordnet ist, und mit ihrem offenen Ende (32d) enden, wobei weiterhin die Leitungen (32) in entgegengesetzten Richtungen angeordnet sind, so daß, wenn der Glättkopf (10) in eine Richtung dreht, nur eine Leitung (32) tätig ist, während die andere Leitung (32) tätig ist, wenn der Kopf (10) in eine entgegengesetzte Richtung dreht; und daß zwischen dem Inneren des Gehäuses (14) und der oberen angebrachten Abdeckung (16) ein Flansch (17) angebracht ist, der sich erstreckt, um die Innenwand des Gehäuses (14) zu streifen, wobei dieser die Aufgabe hat, den Pegel des Schmiermittelpools zu beschränken und erniedrigt aufrecht zu erhalten, wobei jede Undichtigkeit daraus nach außen verhindert wird.

2. Kopf nach Anspruch 1, **dadurch gekennzeichnet, daß** das Ende des Durchgangs (34), das dem entgegengesetzt ist, das an dem offenen Ende (32a) der Leitungen (32) angeschlossen ist, in den oberen Abschnitt des ringförmigen Zwischenraums (36) strömt, der zwischen der Welle (18) und der Öffnung der angebrachten Abdeckung (16) umfaßt ist, durch die die Welle (18) führt.

3. Kopf nach Anspruch 2, **dadurch gekennzeichnet, daß** das Öl aus dem ringförmigen Zwischenraum (36) absteigt, um alle die darunterliegenden Mechanismen und Getriebe (30 und 38) zu schmieren, auf die mittels Gravitation und Zentrifugalkraft verteilt wird.

4. Kopf nach Anspruch 3, **dadurch gekennzeichnet, daß** der Ölstrom zwischen dem Mechanismus und den Getrieben (30, 38) durch Öltröpfeln dank Betriebszwischenräumen gestattet ist, die zwischen diesen bestehen, und deshalb die Schmiermittelverteilung in kontinuierlicher und erzwungener Art und Weise wegen des gleichen Kopfes auftritt, der dem Öl an dem Einlaß der Leitung (32) während der Drehung des Glättkopfes (10) bereitgestellt wird.

## Revendications

1. Tête de lissage et de polissage (10) comprenant un dispositif de lubrification pour les mécanismes et engrenages internes, la tête de lissage et de polissage (10), destinée au traitement de matériaux généralement en pierre et/ou en céramique, tels que des ardoises, des panneaux, des tuiles et autres, comprenant un corps étanche en forme de boîtier (12) entraîné en rotation par un arbre (18) d'un moteur d'entraînement, qui pénètre dans ce corps et transmet un mouvement opérationnel, par l'intermédiaire desdits mécanismes et engrenages, à des secteurs oscillants (28) ou à des galets rotatifs (40) de matériau abrasif, montés à l'extérieur dudit corps en forme de boîtier (12), ce dernier comprenant essentiellement un carter (14) renfermant lesdits organes fonctionnels et engrenages pour la transmission du mouvement, carter qui est entraîné en rotation par ledit moteur d'entraînement et qui est fermé de façon étanche, à son sommet, par un couvercle fixe (16) traversé par ledit arbre (18) du moteur d'entraînement, ladite tête étant caractérisée en ce qu'elle comprend, à l'intérieur de la partie supérieure de la tête (10), au moins une paire de conduits (32) disposés symétriquement l'un vis-à-vis de l'autre et par rapport à un plan diamétral, dans lequel est situé l'axe de rotation de l'arbre (18) du moteur d'entraînement, et raccordés, par une extrémité ouverte (32a), à un passage (34) communiquant avec l'intérieur dudit carter (14) et pratiqué dans ledit couvercle fixe supérieur (16), dans une zone sensiblement centrale, lesdits conduits (32) s'étendant tout d'abord dans une direction sensiblement radiale à l'intérieur dudit carter (14), jusqu'au contour d'un plan diamétral perpendiculaire à l'axe de rotation de l'arbre (18) du moteur d'entraînement, puis se recourbant et se prolongeant par une partie terminale (32c), disposée suivant une direction sensiblement tangentielle au contour dudit carter (14), et se terminant par leur extrémité ouverte (32d), les conduits (32) étant en outre disposés dans des directions opposées de sorte que, lorsque la tête de lissage (10) tourne dans un sens, un seul conduit (32) est actif, tandis que l'autre conduit (32) est actif lorsque la tête (10) tourne dans un sens opposé, et en ce que, entre l'intérieur du carter (14) et le couvercle fixe supérieur (16), est interposée une collerette (17) venant effleurer la paroi interne du carter (14), cette collerette ayant pour fonction de limiter et de maintenir abaissé le niveau de la réserve de lubrifiant, en empêchant toute fuite de celui-ci vers l'extérieur.

2. Tête selon la revendication 1, caractérisée en ce que l'extrémité du passage (34), opposée à celle qui est raccordée à l'extrémité ouverte (32a) des conduits (32), débouche dans la partie supérieure de l'espace annulaire (36) compris entre ledit arbre (18) et l'ouverture du couvercle fixe (16) à travers laquelle passe l'arbre (18).

3. Tête selon la revendication 2, caractérisée en ce que l'huile s'écoule vers le bas depuis ledit espace annulaire (36) pour lubrifier l'ensemble des mécanismes et engrenages (30 et 38) situés en dessous, sur lesquels elle se répartit sous l'effet de la gravité et de la force centrifuge.

4. Tête selon la revendication 3, caractérisée en ce que la circulation d'huile entre les mécanismes et engrenages (30, 38) est obtenue par un ruissellement de l'huile, grâce à la présence d'interstices fonctionnels entre ces derniers, et la répartition du lubrifiant se fait, par conséquent, de façon continue et forcée, grâce au fait que la même pression est communiquée à l'huile à l'entrée du conduit (32) pendant la rotation de la tête de lissage (10).
